# EUROPEAN PATENT APPLICATION

(11) **EP 3 471 029 A1**
(43) Date of publication of application: **17.04.2019**
(21) Application number: 18199309.8
(22) Date of filing: 09.10.2018
(51) Int. Cl.: G06Q 10/04, G06Q 50/06

(54) **METHOD FOR AUTOMATIC CLOUD CONTROL OF ENERGY STORAGE SYSTEMS**

(30) Priority: 13.10.2017 US 201715783187
(71) Applicant: Schneider Electric IT Corporation, West Kingston, RI 02892 (US)
(72) Inventor: SHEEHAN, Stuart Michael, West Kingston, RI 02892 (US); HEALEY, Jonathan Mark, West Kingston, RI 02892 (US); HEALEY, Christopher M., West Kingston, RI 02892 (US)
(74) Representative: Murgitroyd & Company

(57) **Abstract**

A method for controlling an energy storage device in an energy storage system includes accessing data stored in a remote cloud storage system where the data including time series data, performing semantic analysis on data accessed in the remote cloud storage system, determining an optimized power cap for a future time of use (TOU) period based on the semantic analysis using an optimization algorithm, and controlling the energy storage device based on the optimized power cap.

## Description

### FIELD OF THE INVENTION

Embodiments of the invention relate generally to energy storage control using an automated data collection scheme and a self-learning optimization algorithm.

### BACKGROUND

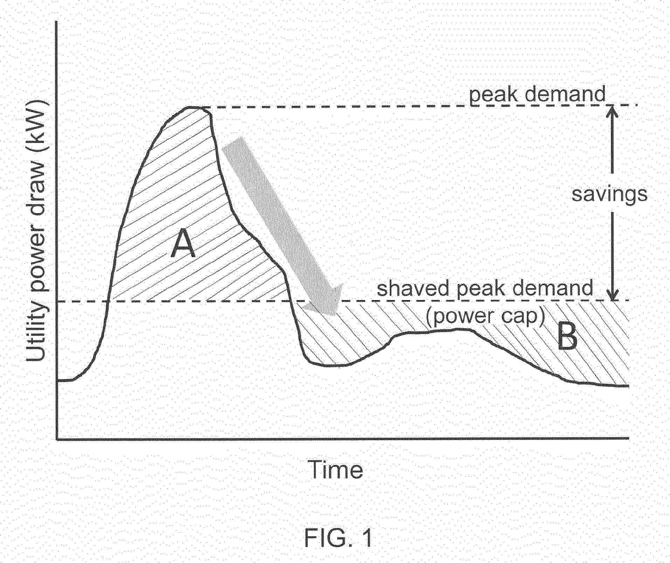

For industrial and commercial customers, electricity prices are based on two elements: actual usage (kWh), and a penalty based on the highest point of demand (or peak) within the billing period (weekly, monthly, or annually). Demand is often calculated using demand intervals, which are typically a short timeframe (e.g., 15 minutes) during which overall usage is aggregated and tracked as a total. The average calculated is the kW demand for this period. Charges based on demand can be controlled or reduced by the customer by modifying energy usage. For example, "peak shaving" is the ability to control usage from an energy supplier during intervals of high demand for purposes of limiting or reducing demand penalties for the billing period. The concept of peak shaving is illustrated in FIG. 1, where the horizontal axis represents time, and the vertical axis is power consumption. The upper horizontal line shows the peak demand and the lower horizontal line represents the shaved peak demand, also referred to as a "power cap." One example of a method for peak shaving includes having customers implement various techniques to lower their energy usage such that their peak usage is rescheduled to fit under the lower threshold, i.e., the line represented by the shaved peak demand in FIG. 1. The difference between the peak demand and the shaved peak demand results in energy savings. Peak shaving may be very helpful in reducing demand costs for large industrial and commercial customers who have usage levels that can vary significantly.

### SUMMARY

One aspect of the present disclosure is directed to a method for controlling an energy storage device in an energy storage system, the method including accessing data stored in a remote cloud storage system, the data including time series data, performing semantic analysis on data accessed in the remote cloud storage system, determining an optimized power cap for a future time of use (TOU) period based on the semantic analysis using an optimization algorithm, and controlling the energy storage device based on the optimized power cap.

In some embodiments, the method includes updating data stored in the cloud storage system with data obtained from a monitoring system.

In some embodiments, the cloud storage system is updated at predetermined time intervals.

In some embodiments, using the optimization algorithm includes implementing a machine learning model.

In some embodiments, the method includes training the machine learning model with data obtained from the monitoring system.

In some embodiments, the method includes determining an estimated optimal power cap and using the estimated optimal power cap in determining the optimized power cap.

In some embodiments, determining the optimized power cap includes generating at least one forecast for the future TOU period using a machine learning algorithm and using the at least one forecast in the optimization algorithm.

In some embodiments, the optimization algorithm is a stochastic optimization algorithm.

In some embodiments, the stochastic optimization algorithm employs a stochastic predictive model.

In some embodiments, the method includes calculating a forecast error and using the forecast error in the stochastic optimization algorithm.

In some embodiments, the time series data includes energy consumption values for energy consumption devices, weather data, and building data.

Another aspect is directed toward a system for controlling an energy storage device in an energy storage system, the system including at least one energy storage device, a monitoring system configured to acquire time series data and store the time series data in a remote cloud storage system, a controller coupled to the cloud storage system, the at least one energy storage device, and the cloud storage system, the controller configured to: access data stored in the remote cloud storage system, perform semantic analysis on data accessed in the remote cloud storage system, determine an optimized power cap for a future time of use (TOU) period based on the semantic analysis using an optimization algorithm, and control the energy storage device based on the optimized power cap.

In some embodiments, the monitoring system is configured to update at predetermined time intervals.

In some embodiments, using the optimization algorithm includes implementing a machine learning model.

In some embodiments, the controller is configured to train the machine learning model with data obtained from the monitoring system.

In some embodiments, the controller is configured to determine an estimated optimal power cap and to use the estimated optimal power cap in determining the optimized power cap.

In some embodiments, determining the optimized power cap includes generating at least one forecast for the future TOU period using a machine learning algorithm and using the at least one forecast in the optimization algorithm.

In some embodiments, the optimization algorithm is a stochastic optimization algorithm.

In some embodiments, the stochastic optimization algorithm employs a stochastic predictive model.

In some embodiments, the controller is configured to calculate a forecast error and to use the forecast error in the stochastic optimization algorithm.

Still other aspects, embodiments, and advantages of these example aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. Embodiments disclosed herein may be combined with other embodiments, and references to "an embodiment," "an example," "some embodiments," "some examples," "an alternate embodiment," "various embodiments," "one embodiment," "at least one embodiment," "this and other embodiments," "certain embodiments," or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a diagram illustrating the concept of peak shaving;
FIG. 2 is a process flow diagram of a directly forecasted optimized power cap for controlling energy storage devices according to various aspects of the invention;
FIG. 3 is a process flow diagram of an indirectly forecasted optimized power cap for controlling energy storage devices according to various aspects of the invention;
FIG. 4 is a process flow diagram of a model predictive process according to various aspects of the invention; and
FIG. 5 is a block diagram of an energy storage control system according to various aspects of the invention.

### DETAILED DESCRIPTION

The aspects disclosed herein in accordance with the present invention, are not limited in their application to the details of construction and the arrangement of components set forth in the following description or illustrated in the accompanying drawings. These aspects are capable of assuming other embodiments and of being practiced or of being carried out in various ways. Examples of specific implementations are provided herein for illustrative purposes only and are not intended to be limiting. In particular, acts, components, elements, and features discussed in connection with any one or more embodiments are not intended to be excluded from a similar role in any other embodiments.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated reference is supplementary to that of this document; for irreconcilable inconsistencies, the term usage in this document controls. Moreover, titles or subtitles may be used in the specification for the convenience of a reader, which shall have no influence on the scope of the present invention.

For purposes of saving costs, certain utility customers, also referred to herein as users, make energy usage contracts with utility companies that provide power. These contracts include usage limits based on a forecasted peak usage, and energy usage over the limit can lead to costly overage charges. As described above, peak shaving is a cost-saving method by which users can control their usage during intervals of high demand. One method of peak shaving, which is also referred to as power capping or demand capping, includes supplying demand loads during short periods of peak demand from energy storage devices rather than using energy from the utility company. Peak shaving can thus be implemented by customers to reduce their peak load consumption and the associated peak rate energy charges from the utility company by implementing the use of their own energy storage devices. Referring back to FIG. 1, customers having an energy usage contract with a "set" value for the power cap can use energy storage devices as sources of energy (instead of using energy provided by the utility company) during periods when the customer's demand for power is higher than the power cap, i.e., in the area of FIG. 1 labeled "A." During these periods, the energy storage devices function as energy sources and discharge to provide energy which can be used by the user's energy consumption devices during these periods of peak usage. When the customer's demand for power is lower than the power cap, i.e., in the area of FIG. 1 labeled "B," the energy storage devices can be recharged in preparation for the next peak. In some instances the power cap may have a level expressed in units of electrical power, e.g., kilowatts (kW).

Non-limiting examples of energy storage devices include electrochemical and lithium ion batteries, hydraulic (pumped) storage, mechanical storage (e.g., flywheels), thermal storage, compressed air storage, storage in an electric field (e.g., capacitors), and fuel cells. In one embodiment, the energy storage device is an uninterruptible power supply (UPS). UPS devices are typically used to provide backup power to an electrical device or load while the primary power source is unavailable. While UPS devices are typically only used as a source of backup power and to provide a continuous source of power at a local level, advances in battery technology which had originated in the use of lead acid batteries to the present use of lithium ion batteries allow the UPS devices to be used for implementing peak shaving. Lithium ion batteries have no memory effect, which is a detrimental process where repeated partial discharge/charge cycles cause the battery to "remember" a lower capacity. This leads to detrimental affects on the operational life of the battery. Other advantages provided by lithium ion batteries are that they can deliver large amounts of current for high-power applications, and do not require scheduled cycling to maintain their battery life.

Typical approaches toward energy storage deployment for peak shaving use a manual approach, where historical load profiles are referred to by the user when setting the power capping limit drawn from the grid. As discussed above, the main purpose of setting the power cap is to reduce the utility demand charges incurred by the user by utilizing energy storage devices to provide power during periods when the demand is higher than the limit set by the power cap, i.e., in region "A" of FIG. 1. The typical process involving manual control of the energy storage device deployment has little or no mathematical premise in the decision making process and has no updating process as new information becomes available. These characteristics of the manual approach lead to inefficient usage of the energy storage device and in some instances can reduce the user's ability to save on peak demand charges.

At least some systems and methods disclosed herein improve upon the manual approach described above by efficiently controlling energy storage devices based on peak prediction (also referred to herein as load forecasting) and self-learning optimization algorithms. The control methods and systems described herein use an automated process that uses data analyzed from multiple sources to provide real-time feedback and prediction, which allows energy storage devices to be controlled based on current conditions, forecasts, and uncertainty for purposes of minimizing utility bills. The methods and systems are also configured to be updated as new data is made available, which further improves their accuracy and performance.

The ability to forecast electrical power usage (and thus a power cap) can be useful for users who may desire to negotiate a rate contract with the utility company. Discussed below are two methods for determining an optimized power cap.

### Direct method to predict power cap

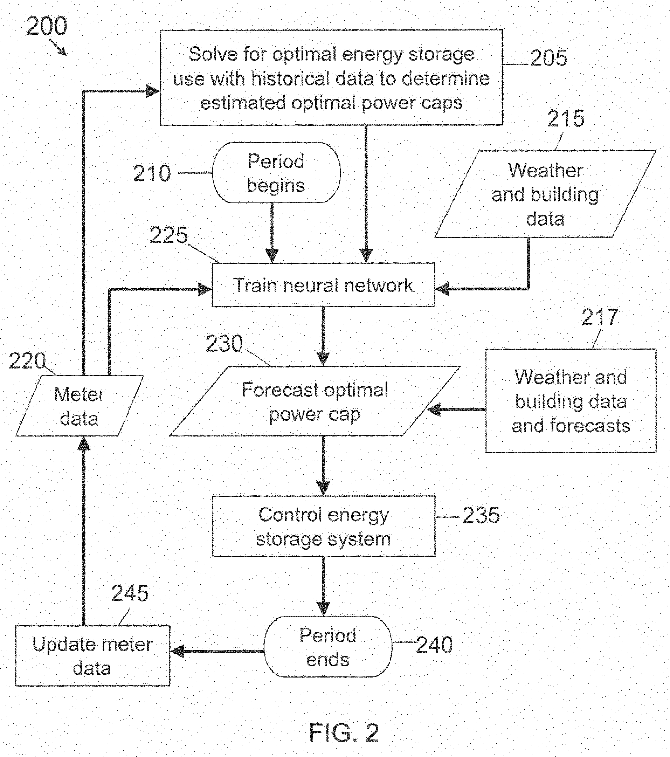

Referring to FIG. 2, a process flow diagram for a direct method 200 for controlling energy storage devices is shown. As discussed below, the method 200 may utilize a self-learning optimization algorithm for determining an optimized power cap that can then be used for controlling (e.g., discharging and charging) one or more energy storage devices.

The method begins at 205 where historical data stored in one or more databases is mined and used for determining estimated optimal power caps on all historical days. Historical data can relate to quantifiable factors that can have an effect on the overall operation of an energy storage device. One example of such factors includes weather factors such as temperature, humidity, wind, cloud cover, and precipitation. Another example includes time factors, such as the day of the week, the time of day, if the day is a holiday or other day of atypical load. Another example includes load factors, such as the energy usage, or load, on the electrical system by energy consumption devices associated with the user.

Using regression methods and a linear programming solver, it is possible to identify a mathematical relationship that allows the load to be forecasted or otherwise estimated if one or more forecasted factors, such as temperature and time of day, are known using reference data points (e.g., historical days). An optimal power cap for historical time periods can be determined using data stored in the historical database. A model may then be generated that associates one or more factors associated with the stored data to determine an estimated optimal power cap. For purposes of illustration, an example using temperature can be used. Reference days or time periods having similar temperature profiles or temperature values (forecasted factors) can be correlated to the predicted or forecasted temperature values or profiles for a future time period (e.g., day, or time period of day) to be forecasted. Reference days or time periods stored in the database with similar temperature values or profiles to the day or time period to be forecasted can be used as predictors to use in forecasting load data, i.e., determining the estimated optimal power cap in 205. The estimated optimal power cap corresponds to the minimum value of power consumption while still complying with one or more factors or constraints on the energy storage system, such as the capacity and discharge and charge rates.

An estimated optimal power cap can be calculated for different forecasted (future) time of use periods. A "time of use" (TOU) period refers to a time period over which differential utility rates (demand and/or energy) are applied. A TOU period may vary by billing period. Several TOU periods may be defined, including peak, part-peak, and off-peak, that all have different rates. For instance, a peak period may be from noon to 6:00 PM on a weekday, excluding holidays. The time span may be different depending on the season, and different rates may apply for a particular TOU depending on the season. According to certain aspects, the TOU period may be divided by a time interval (e.g., a demand interval as described above). A time interval is the smallest increment of time over which billed energy or demand is determined. An example interval for demand charges is 15 minutes. According to this example, a demand charge for a specific TOU period within a billing period (the time span over which a billed parameter is determined) is based on the maximum average demand in a given 15 minute interval for those periods.

Process 200 uses an optimization algorithm to determine an optimized power cap for an upcoming or future (forecasted) TOU period. This involves using a plurality of sets of data having one or more parameters that can be used for determining the optimized power cap. According to one embodiment, the optimization algorithm implements a machine learning model for determining the optimized power cap. According to one embodiment, the machine learning model is an artificial neural network (ANN). The ANN may be a mathematical model or computational model that analyzes the different sets of data and generates the optimized power cap. The estimated optimal power caps calculated in 205 is one example of a data set that is used by the ANN. Other data sets used by the ANN include weather and building data (215) and meter data (220) that is collected in real time or in time intervals, as described in further detail below.

Weather data, also referred to herein as environmental data, measured or otherwise obtained at 215 includes any type of environmental factor that can influence electrical power demand or usage by a user. Weather data can include the same type of environmental data used and stored in the historical data, including temperature, humidity, precipitation, wind, cloud cover, etc. Weather data can be obtained using sensors configured to measure one or more weather parameters, e.g., temperature, humidity, wind, that are placed in proximity to the user (e.g., on the roof or external area of the user site) or can be obtained from a weather data source external to the user site, e.g., an online internet weather site or external weather station.

Building data obtained at 215 of process 200 includes any type of building factor or information that influences the electrical power demand or usage by a user. Building data can include data that relates to the physical characteristics of the building or structure (or portions thereof) on the user site that utilizes energy provided by the utility company and energy storage devices. Building data may include data regarding the building's geographic location (e.g., coordinates, altitude, etc.), dimensions (e.g., floor space, stories, etc.), use type (e.g., commercial, residential, data centers), building materials, orientation, window coverage, insulation, HVAC systems, and/or lighting. In some instances the building may be a data center housing computing devices, energy storage devices, telecommunication devices, power supplies, and other related equipment. The data center may require a supporting system or infrastructure for supplying power and cooling to this equipment.

Meter data measured or otherwise obtained at 220 includes power consumption or energy usage by the energy consumption devices associated with the user. Meter data may be provided by one or more power meters configured to measure power consumption and are distributed throughout the user's site or facility. Meter data can include power consumption of a building (e.g., an aggregate value of power used by power consumption devices located in the building), power consumption of one or more energy consumption devices located within the site, e.g., servers, appliances, HVAC systems, etc., and in some instance can also include power consumption data from energy storage devices, such as UPS devices. According to some embodiments, the power meter may be smart meter, which is capable of recording consumption of electric energy in real time or near-real time and communicates that information to the utility company and/or user.

According to some embodiments, a monitoring system may be used for implementing data acquisition used by the ANN. For instance, a monitoring system can be used for acquiring the weather and/or power meter data described above. The monitoring system can include a network of sensors positioned within the user's site and may also include one or more processors that are configured to receive data from the sensors and/or from external sources (e.g., an external weather station).

One advantage of the use of a machine learning algorithm such as the ANN lies in its ability to establish non-linear relationships between different types of input data (input vectors), such as environmental data and situational data (as well as different types of data within these data groups) and the resulting optimized power cap value(s) (output vector).

A typical ANN includes a network of interconnected nodes. The nodes include a plurality of artificial neurons, and each artificial neuron has at least one input with an associated weight. The ANN includes an input layer, hidden layers, and an output layer, and each layer consists of a number of neurons. The hidden and output layer neurons are each linked to the neurons in the previous layer. Other elements of the ANN include the mentioned weights associated with each link, as well as an optional bias term, and activation and transfer functions. ANN "knowledge" is stored as the connection weights. Nonlinearities and complexities of the model are captured by the activation and transfer functions, and by the number of neurons in the hidden layers, respectively.

The artificial neurons may process information using a connectionist approach to computation. The ANN is an adaptive system, where it changes based on external or internal information that flows through the ANN during the training or learning phase. Specifically, the weight (or strength) of the connections (such as between adjacent artificial neurons, or between an input and an artificial neuron) within the ANN is adapted to change. The ANN can thus be trained at 225 in process 200 using the different data sets to determine an optimized power cap for an upcoming (forecasted) TOU period or interval within the TOU period. Training of the ANN may be based on back-propagation learning, as known in the art.

Predicted (forecast) values for the optimized power cap(s) for a future TOU period or interval within the TOU are determined by the trained ANN at 230 in process 200. For example, according to some embodiments, the trained ANN is fed relevant model inputs and forecasts, such as weather and building data and forecasts 217, and/or power meter data 220 for predicting the optimal power cap. In addition, at periodic time intervals, e.g., on a daily basis, the power meter data 220 may be used with a linear programming solver to determine the optimal power cap for the time interval (e.g., the previous day), in a similar manner as described above in reference to 205.

Responsive to the forecasted optimal power cap determined at 230, the energy storage device can be controlled to discharge to ensure the load does not go above the optimal power cap. In some instances, the energy storage device can also be controlled to recharge. As previously mentioned, the ANN may be an adaptive system, and can therefore be updated or "retrained" using the training data (e.g., updated meter (245) and in some instances, weather measurements and/or other factors, including new measurements or other data that becomes newly available that may influence the optimal power cap) for a given time period bounded by a time period (predetermined time interval) beginning at 210 and a time period ending at 240. The time period may be an interval within a TOU period, e.g., 15 minutes. Thus, the ANN can be retrained as the day progresses as it has access to more data points. In addition, with more days to train the network, the accuracy and performance of the optimized power caps determined at 230 improves with time because the training data set increases in size.

According to at least one embodiment, demand charges are accessed based upon monthly peaks, which means that a control system or controller used to control the energy storage devices will not enforce power caps in the off-peak and part-peak regimes that are lower than caps that have already been enforced in the billing period. This prevents unnecessary use of the energy storage devices and preserves their operational life. This policy is not enforced in the peak regime because the high energy prices allow for arbitrage benefits from energy storage energy shifting.

Although not explicitly shown in FIG. 2, the process 200 may also implement the use of a semantic search engine, as described in further detail below. For example, the meter, weather, and building data, and in some instances the historical data and/or estimated optimal power caps, may all be stored as time series data in a time series database of a cloud storage system, which also includes an ontology database. The semantic search engine uses the data stored on the cloud server to classify the many different sources and types of data stored in the cloud storage system, which allows for more simple usage by the optimization algorithm, such as the machine learning algorithm, in determining the optimal power cap. For example, the semantic search engine may function to improve the speed and accuracy of queried data used to train the machine learning model, and in some instances may also be used for determining the optimal power cap.

### Indirect method to predict power cap

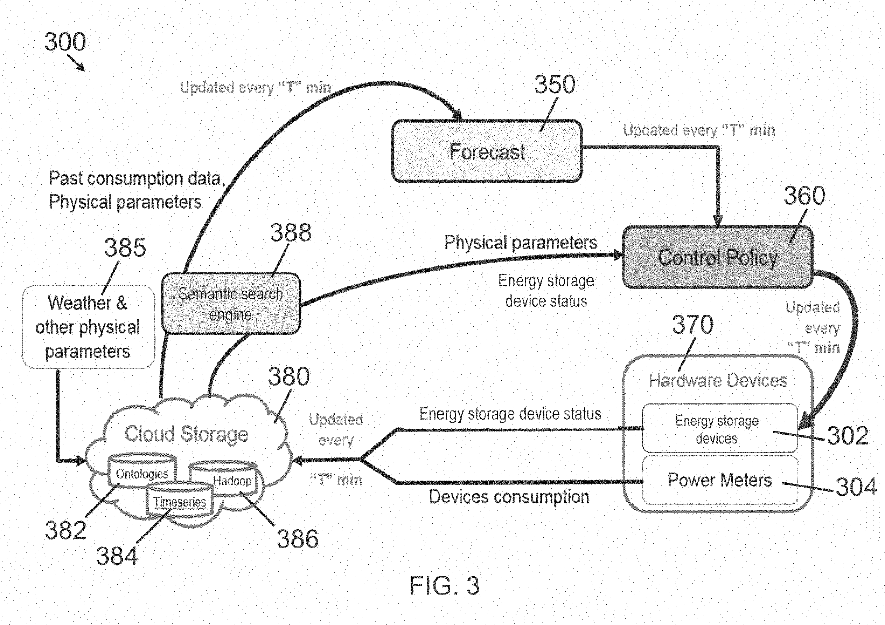

The method 200 described above includes a directly forecasted optimized power cap for controlling energy storage devices. An indirect forecasting method 300 is described below in reference to FIG. 3. The indirect approach allows for multiple extensions of the direct approach to the power capping problem. For instance, the indirect approach can allow for time-based pricing (i.e., peak, off-peak, part-peak TOU periods). The indirect forecasting method may also be used in instances where more than one forecasted optimized power cap is desired, such as in instances where there is uncertainty in one or more factors that influence the power cap. For instance, multiple forecasts may be calculated in instances where there is uncertainty in pricing, such as when the utility company provides projected short-term pricing (e.g., hour-ahead), demand (e.g., when power consumption is highly variable), and/or in power generation, such as variability in renewable energy resources such as wind or solar energy, which may influence the user's reliance on utility-provided power and/or energy storage devices. The indirect approach may also provide the opportunity to solve distributed generation and demand problems, such as in instances where there are multiple sources of power (e.g., utility-provided power, renewable power, stored power) or multiple demand paths with their own energy storage capabilities.

According to at least one embodiment, the indirect forecasting method (also referred to herein as a multistep process) includes two main components. A forecast is first developed, and then a control algorithm is deployed that is based upon the developed forecast. The following example utilizes a forecast of load, but it is to be appreciated that other types of forecasts are also within the scope of this disclosure, including forecasts of pricing and generated power.

Referring to FIG. 3, a flow diagram of an indirect method 300 for controlling energy storage devices is shown. Process 300 begins by generating or otherwise producing a load forecast at 350. The load forecast is a forecast of a future (forecasted) TOU period (e.g., a day) or interval within the TOU period. In some instances, the load forecast may be based upon a future TOU period's forecasted enthalpy (e.g., to estimate the necessary cooling requirements), and can be determined based on data acquisition from a cloud server 380 (also referred to herein as cloud storage or cloud storage system). The term "cloud server" refers to any appropriate internet-based application server or computer resource and can be any storage subsystem or collection of storage subsystem that are accessible over the internet or public network for storing data. For example, the cloud storage system 380 can refer to a service in which data is maintained and managed remotely and made available via one or more data networks. Cloud storage can include private or public cloud systems distributed over multiple geographically-dispersed locations. Cloud storage allows for large data sets to be handled without any storage infrastructure constrains and can be accessed from multiple locations.

The cloud storage system 380 is configured to acquire data from multiple sources at predetermined time intervals, and in some instances may acquire data from one or more sources continuously. One example of data obtained and stored in the cloud storage system 380 includes weather data and other physical parameters (385). The weather data may include the same weather data discussed above in reference to 215 of process 200 of FIG. 2, and can include, for example, temperature, humidity, cloud cover, and/or precipitation data. Other physical parameters included with 385 include building data, as described above (e.g., as described in reference to 215) and energy pricing. Another example of data received and stored by the cloud storage system 380 includes power meter data obtained from power meters 304, which can include the same power meter data discussed above in reference to 220 of process 200 of FIG. 2. For instance, meter data can include power consumption of one or more devices, such as servers, HVAC systems, including cooling units, and/or power supplies associated with the user (utility customer). The power meters 304 (e.g., smart meters) and energy storage devices 302 (e.g., UPS devices) are included as hardware devices 370 used by or otherwise associated with the user and are typically located at the user site or facility. The cloud storage system 380 can also include data related to the status of the energy storage device 302, such as remaining storage capacity (e.g., power level status). In some instances, a "reserve" or minimum capacity may be needed on the energy storage device, such as a UPS, for use by energy consumption devices in the event that utility power is unavailable, and this may also be included as a factor. In addition, historical data, as described above, may also be stored on the cloud storage system 380.

According to at least one embodiment, the cloud storage system 380 is a repository for one or more types of cloud storage, including different types of databases, such as an ontology database 382 and a time series database 384, which are shown as non-limiting examples of the different types of databases that may be used. The time series database 384 may be a scalable database that stores the data acquired at predetermined time intervals from multiple sources (e.g., weather data, meter data, power consumption of energy consumption devices). The data acquired or otherwise received and stored in the cloud storage system 380 at the predetermined time intervals is generally referred to as time series data (and stored in the time series database 384) because it takes the format of a value or a set of values with a corresponding time stamp, or temporal ordering. The data itself can be analyzed to extract meaningful statistics and other characteristics. Forecasting a load can be achieved by applying previously observed data values to a model.

The ontology or ontological database 382 differs from a standard relational database (which is designed for rapid data storage and retrieval) in that an ontological database is capable of making inferences by defining the relationships between different types of data as a program, rather than organizing the data into categories. The ontology database 382 may relate information for the disparate data acquired by and stored in the times series database 384 in a standardized fashion based on the logical model of the ontology database 382.

The cloud storage system 380 may also include a distributed file system 386, such as a Hadoop cluster, which functions to manage data stored in the cloud storage system 380. In general, Hadoop is a software framework for storing and processing large amounts of data in a distributed fashion across large clusters of storage entities. As will be appreciated, Hadoop is just one example of a type of distributed computing application that may be used in the cloud storage system 380 and other types are within the scope of this disclosure.

Other types of cloud storage, including databases and database technologies may also be included in the cloud server 380, such as a structured query language (SQL) database.

Data stored on the cloud storage system 380 can be automatically queried or otherwise accessed at predetermined time intervals, and in some instances may be updated at predetermined time intervals. For instance, one or more of the databases stored on the cloud storage system (e.g., ontology database 382, time series database 384, distributed file system 386) may be queried or otherwise accessed.

According to some embodiments, a querying layer applies a semantic web engine or web technology for the retrieval of data from the cloud storage system 380. For example, process 300 of FIG. 3 includes a semantic search engine 388 that is used for forecasting (e.g., load forecasting) at 350. The semantic search engine 388 is configured to classify the many different sources and types of data stored in the cloud server 380, which allows for more simple usage by an optimization algorithm. For instance, the semantic search engine 388 may be used to query or otherwise access one or more types of repositories of data stored on the cloud storage system 380. An example of a semantic search engine 388 is described in PCT application number PCT/US2017/025064, which is incorporated herein by reference in its entirety. The semantic search engine 388 uses information stored in the cloud storage system 380 to infer additional knowledge using relationships encoded in the data. The process generally includes generating semantic tags from data stored in the ontological database 382 and uses the semantic tags for categorizing and ranking the data. The semantic search engine may therefore function to provide an interface for querying multiple types of cloud storage efficiently. The semantic relationships can be used for forecasting at 350, and in some instances, may be used for determining or otherwise implementing the control policy 360.

The load forecast (load profile) performed at 350 can be generated using any one of a number of different statistical classification algorithms. For instance, according to one embodiment, a memory-based machine learning model such as k-nearest neighbor (K-NN), generalized linear model (GLM), or ANN may be implemented. The K-NN analytical model can generally be described as a memory-based technique where the load forecast is generated using observed loads for similar cases in the stored data (i.e., data stored on the cloud storage system). K-NN is similar to the ANN model described above in that it is capable of accepting multiple types of input data, such as environmental data and situational data (as well as different types of data within these data groups) and forming a single output vector (the forecasted load). For instance, the K-NN process can use two or more time series sets of data (or other data provided by the semantic search engine) as input and then outputs a single time series set of load forecast data. As indicated in FIG. 3, the K-NN model (or other model) used at 350 uses historical (e.g., past consumption data) and prediction data points (e.g., physical parameters) as inputs and returns the forecasted load. The process involves comparing normalized or scalarized and re-weighted data points to the original historical and prediction data points and finding representative data points that most closely resemble the original data points. The K-NN model is also capable of being "retrained" with updated data, as described above in reference to the ANN. The forecast 350 is thus updated at predetermined time intervals, as indicated in FIG. 3.

Error associated with the forecast 350 can be determined by the difference between the calculated forecast by the algorithm (e.g., the K-NN method described above) and the actual forecasted values (e.g., load values obtained by the power meters 304) at the predetermined time intervals. In some instances this error (also referred to herein as the error distribution or forecast error distribution) may also be used in implementing the control policy 360.

The load forecast generated at 350 and, in some instances, the associated error distribution in the prediction, are then used for determining a control policy or algorithm at 360, which is used for controlling the energy storage devices 302. Meanwhile, as indicated in FIG. 3, at predetermined time intervals ("T") the cloud storage 380 is updated with more recent data obtained from the monitoring system (e.g., power meter data), and a new and improved forecast is generated at 350 that makes use of the more recently obtained data. Furthermore, since more data is now available for retraining the model as time processes, the forecasting model is updated regularly and becomes more accurate.

According to one embodiment, the control policy at 360 is implemented using a stochastic optimization algorithm. Stochastic optimization generally refers to a framework or methodology for modeling optimization problems that involve uncertainty. Stochastic optimization can be used as an effective nonlinear optimization tool for developing a control algorithm that optimally discharges and recharges power from and to the energy storage devices 302. Optimized power caps can thus be determined based on a stochastic optimization algorithm.

The stochastic optimization algorithms described herein are configured to specify and redetermine the charge/discharge control policy 360 for the energy storage device at predetermined intervals, e.g., intervals throughout the day, based on improved forecasts from 350. These methods utilize forecasts of demand and pricing over a time horizon into the future and then solve the optimization sub-problem to set the control policy 360 for the current time interval. Two methods for implementing stochastic optimization are discussed below. In some instances, both methods may be used.

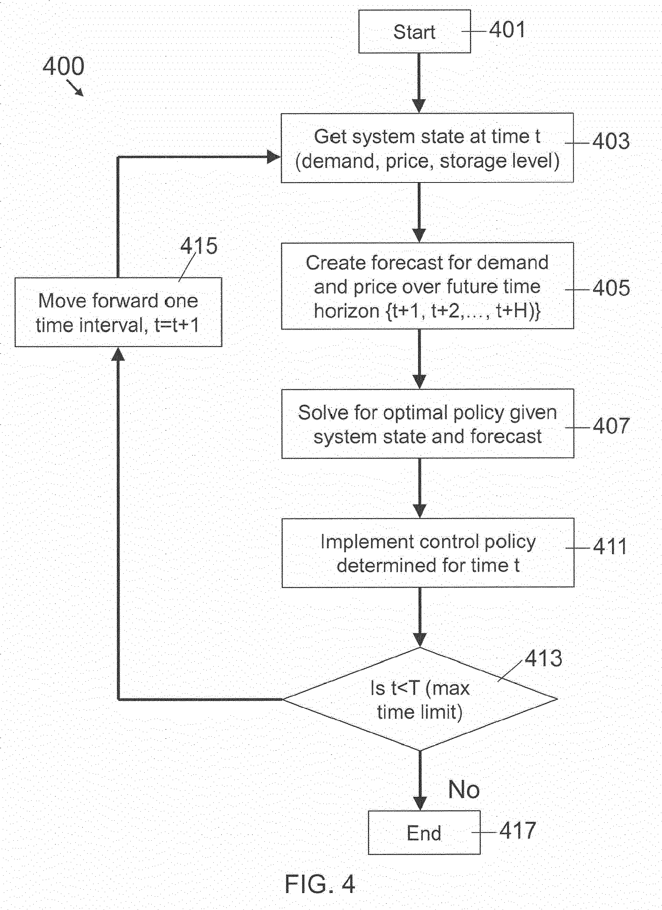

In some embodiments, stochastic optimization is implemented using a model predictive control method over a finite time horizon. Model predictive control allows for uncertainty or variability in one or more of the factors that may affect the power cap, including those described above relating to pricing, demand, and power generation. The model uses forecasts of these values over a limited time horizon. For example, the load demanded by a building may be offset by renewable energy (e.g., solar or wind power) generated by the user. Since wind and solar energy can vary significantly throughout a given time period due to the time of day, the amount of cloud cover, and other environmental factors, the ability to incorporate this uncertainty is useful in determining a more accurate optimal power cap. The optimization sub-problem can then be solved with the forecasted values using the optimal charge/discharge control policy for the current time interval. One example of a model predictive process is shown in method 400 of FIG. 4.

Process 400 begins at 401, and at 403 the system state data at time "t" is received or otherwise obtained. For instance, parameters such as demand (from forecast 350) energy pricing, energy storage device status (e.g., the storage level) can be obtained at 403. At 405, a forecast for demand and price over a future time horizon {t+1, t+2, ...., t+H} (where H is the length of the time horizon) is determined. Forecasting can be implemented using one or more of a number of different techniques, such as through time-series methods and/or machine learning methods such as neural networks, regressions, and the like. At 407, an optimized control policy is generated using the system state data from 403 and the forecast created at 405. In some instances, an optimized control policy may be generated for time intervals within the time horizon. The optimized control policy generated at 407 is then used to control the energy storage devices at 411. The process also includes determining whether the time increment "t" is less than the maximum time limit "T" at 413 as part of an iterative optimization process. In some embodiments, the maximum time limit is the length of the predetermined time interval as described above (Q: is this correct? What is the relationship between "t" and "T"). If t<T, then the process ends at 417. If t>T, then the process moves forward one time interval (t=t+1) at 415 and 403, 405, 407, 409, and 411 are repeated for the next time interval.

The second method for implementing stochastic optimization involves a stochastic programming approach where a number of scenarios are constructed by sampling the load forecast error distributions, which are then used to control the energy storage device. For instance, an uncertainty space may be associated with the forecast error distributions, and the data may be processed using stochastic programming which considers the uncertainty space via scenarios or samples of the forecast error distributions. For example, in instances where the forecasted quantity (e.g., load, pricing, generated power) is highly variable, using only one forecasted value may provide an unrealistic and sub-optimal control policy. For instance, a wind farm that can generated 50 kW of electrical power when the wind is blowing may also be subjected to the possibility that every 15 minutes there is either wind or no wind. The average forecast may project a value of 25 kW at any given minute, but the more accurate value would be either 0 or 50 kW. A more accurate control policy can be determined by utilizing multiple simulations of the system to find a policy that accounts for this highly variable behavior.

It is to be appreciated that although the methods used to implement the control policy 360 discussed above used a stochastic optimization method, other types of optimization methods are also within the scope of this disclosure, including dynamic programming and reinforcement learning methods (e.g., machine learning methods).

Both the direct and indirect methods described above used models that take data points and their historical values and establish relationships between them. New data obtained by the system (e.g., meter data, weather data) can then be fed back into the model for training and for updating the model and resulting forecasts.

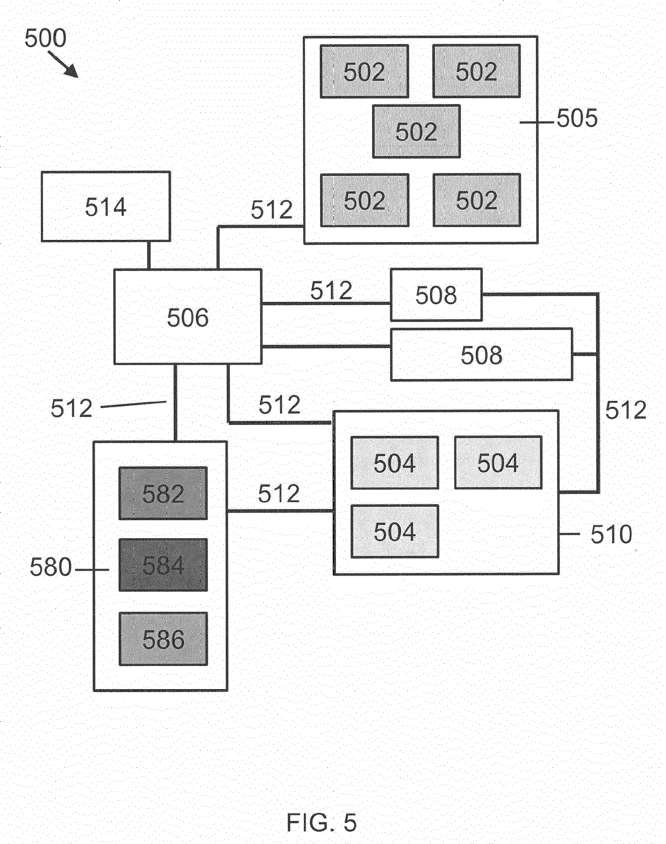

Referring now to FIG. 5, a block diagram of an example of an energy storage control system, generally shown at 500, is shown in accordance with the methods and systems described herein. The energy storage control system 500 includes an energy storage system 505, which includes one or more energy storage devices 502, such as UPS devices, and a monitoring system 510. As previously mentioned, the monitoring system 510 can include a network of sensors 504, such as power meters, or environmental sensors (e.g., temperature, wind, humidity, etc.) positioned within the user's site. The monitoring system 510 may also include one or more processors or other devices that are configured to receive data from external sources (e.g., an external weather station). The energy storage control system 500 also includes or is otherwise coupled a cloud storage system 580, which includes one or more types of cloud storage, including databases such as the ontology database 582, time series database 584, and distributed file system 586, as previously described.

A controller 506 is coupled to the energy storage system 505, the monitoring system 510, and the cloud storage system 580 via a network 512. As indicated in FIG. 5, the monitoring system 510 may also be coupled to the cloud storage system 505 for purposes of updating the databases with newly acquired monitoring data (e.g., power meter data, weather data, etc.)

In some embodiments, the network 512 is a communications network, and can comprise or be part of a private internet protocol (IP) network, the Internet, an integrated services digital network (ISDN), a public or private data network, a local area network (LAN), a metropolitan area network (MAN), a wide area network (WAN), the Internet, a wireline or wireless network, a cellular network, any combination of the therefor, and/or any other suitable communication means, including hardwired communication means.

The controller 506 is configured to implement one or more aspects of the methods described above, including processes 200 and 300 described with reference to FIGS. 2 and 3. For instance, the controller 506 may include one or more processors that are configured to receive and/or query data stored on the cloud storage system 580 and perform the optimization algorithms to determine the optimized power caps that are then used by the controller to control one or more of the energy storage devices 502 of the energy storage system 510. The controller 506 may also instruct one or more components of the monitoring system 510 to obtain monitoring data at predetermined time intervals.

The controller 506 may also be coupled to energy consumption devices 508. The monitoring system 510 may also be in communication with the energy consumption devices 508. For example, power meters of the monitoring system 510 may be used to measure power consumption data associated with the energy consumption devices 508. In addition, the controller 506 may receive status information from the energy storage devices 502 of the energy storage system, and in other instances this information may be stored in the cloud storage system 510.

The controller 506 may also be in communication or otherwise coupled with the external utility company 514. For instance, energy pricing data may be obtained from the utility company 114, as well as peak timing information or forecasting information.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein. Accordingly, the foregoing description and drawings are by way of example only.

## Claims

1. A method for controlling an energy storage device in an energy storage system, comprising:
accessing data stored in a remote cloud storage system, the data including time series data;
performing semantic analysis on data accessed in the remote cloud storage system;
determining an optimized power cap for a future time of use (TOU) period based on the semantic analysis using an optimization algorithm; and
controlling the energy storage device based on the optimized power cap.

2. The method of claim 1, further comprising updating data stored in the cloud storage system with data obtained from a monitoring system.

3. The method of claim 2, wherein using the optimization algorithm includes implementing a machine learning model.

4. The method of claim 3, further comprising training the machine learning model with data obtained from the monitoring system.

5. The method of claim 2, wherein determining the optimized power cap includes generating at least one forecast for the future TOU period using a machine learning algorithm and using the at least one forecast in the optimization algorithm.

6. The method of claim 5, wherein the optimization algorithm is a stochastic optimization algorithm.

7. The method of claim 6, wherein the stochastic optimization algorithm employs a stochastic predictive model.

8. The method of claim 6, further comprising calculating a forecast error and using the forecast error in the stochastic optimization algorithm.

9. A system for controlling an energy storage device in an energy storage system, comprising:
at least one energy storage device;
a monitoring system configured to acquire time series data and store the time series data in a remote cloud storage system;
a controller coupled to the cloud storage system, the at least one energy storage device, and the cloud storage system, the controller configured to:
access data stored in the remote cloud storage system;
perform semantic analysis on data accessed in the remote cloud storage system;
determine an optimized power cap for a future time of use (TOU) period based on the semantic analysis using an optimization algorithm; and
control the energy storage device based on the optimized power cap.

10. (currently amended) The system of claim 9, wherein using the optimization algorithm includes implementing a machine learning model.

11. The system of claim 10, wherein the controller is further configured to train the machine learning model with data obtained from the monitoring system.

12. The system of claim 9, wherein determining the optimized power cap includes generating at least one forecast for the future TOU period using a machine learning algorithm and using the at least one forecast in the optimization algorithm.

13. The system of claim 12, wherein the optimization algorithm is a stochastic optimization algorithm.

14. The system of claim 13, wherein the stochastic optimization algorithm employs a stochastic predictive model.

15. The system of claim 13, wherein the controller is further configured to calculate a forecast error and to use the forecast error in the stochastic optimization algorithm.
